# EUROPEAN PATENT APPLICATION

(11) **EP 1 331 833 A1**
(43) Date of publication of application: **30.07.2003**
(21) Application number: 03380007.9
(22) Date of filing: 20.01.2003
(51) Int. Cl.: H04Q 7/38

(54) **System and process for storing and updating mobile terminal features of the users of a mobile telephone network**

(30) Priority: 24.01.2002 ES 200200152
(71) Applicant: Vodafone Group PLC, Newbury, Berkshire RG14 1JX (GB)
(72) Inventor: del Ser Bartolome, David, 28005 Madrid (ES); Martin Lopez, David, 28027 Madrid (ES); Borrero Ortiz, Santiago, 28028 Madrid (ES)
(74) Representative: Davila Baz, Angel

(57) **Abstract**

It is known that each subscriber's terminal telephone number (MSISDN) and its International Mobile Equipment Identity (IMEI) containing information regarding the features of each mobile terminal circulate through the mobile telephone network. The invention is characterized in that it comprises obtainment means (3) of the IMEI associated with its MSISDN from the mobile telephone network (2), storage means (5) of the obtained MSISDN-IMEI pair and a consultation interface (8) permitting access to the MSISDN-IMEI pair from an outside application (10) or from the network (2) itself in order to obtain from the IMEI the features of each terminal associated with its MSISDN and to thus be able to provide the different services adapted to the features of each terminal even though the user changes it. It also comprises storage means (6) of the features of each mobile terminal model existing on the market and an administration interface (7) for permitting the aforementioned function.

## Description

### OBJECT OF THE INVENTION

The object of the present invention is to solve the inability that current mobile telephone networks have for autonomously having information regarding the features of the connected terminal in order to offer the latter the mobile telephone network services adapted to the features that each mobile terminal has, therefore the system of the invention foresees automatically storing mobile terminal features as from the data circulating through the network, and furthermore foresees automatically updating these data each time a user changes terminal, or the features thereof vary for any other reason.

Apart from being useful for the network operator itself, the information regarding the features of each one of the terminals of the mobile telephone network can also be used for communicating it to third parties dialoguing with the terminal through the operator, and thus be able to offer them the services adapted to the features of each terminal.

### BACKGROUND OF THE INVENTION

In current mobile communications, the problem exists that, in spite of there being defined standards that all mobile terminals on the market comply with, each manufacturer implements its equipment very differently. For example, the multiple terminal models have very different user interfaces, such as the characters per line used on a display screen, its colors, size, definition, CPU type, WAP browser, etc.

Furthermore, although all mobile terminal models perfectly support all tele-services that were initially defined to be offered over a mobile network, many of the existing multiple services and those currently being developed need to be adapted to terminal features that at first had not been contemplated. There are also services which, for accessing them, require the terminals to include a series of specific features, such that in the case of not including them, they cannot access the service, such as in the case of downloading images or audio, for which the terminal must be provided with the suitable features that permit carrying out this function.

Furthermore, with the appearance of third generation mobile telephony, with which the available bandwidth significantly increases, services will appear that are even more demanding in terms of terminal capacities, it is therefore necessary to have updated information about the features of each one of the terminals.

Lastly, it is also necessary to take into account that today it is very common for users to change the mobile terminal quite frequently, therefore it is necessary to obtain updated information of each user's mobile terminal features.

Consequently, in order to be able to offer mobile services adapted to the user's terminal features, it is necessary to know this information.

There are currently determined services having their own process for knowing the terminal features and adapting to them. In this sense, the most important precedent is the WAP Forum consortium's UAProf (User Agent Profile) initiative. The UAProf enables information and application providers to know the terminal features of the accessing users, in this manner, it is possible to offer a service adapted to the terminal features.

On the other hand, there are currently systems in mobile terminal operators that collect information on determined terminals, such as the EIR, used for blocking stolen or fraudulent terminals.

In either of the two cases, the problem they pose is that they require a human operator to introduce the data since, as there are black and white lists, someone must decide who appears on each one of them. Therefore, there is no system that automatically stores the mobile terminal features of each user, and which furthermore updates them each time said features undergo modifications due to changing the terminal or for any other reason.

### DESCRIPTION OF THE INVENTION

In order to solve the aforementioned drawbacks, the invention has developed a system that obtains information regarding the features of each mobile terminal from the information normally circulating through the mobile network and automatically stores it.

The information circulating through the mobile network that the system of the invention needs is the terminal telephone number (MSISDN) of each subscriber, as well as its International Mobile Equipment Identity (IMEI), which is a fifteen-digit code univocally identifying each one of the mobile terminals operating in the mobile telephone network. This code includes different fields, among those being a mobile terminal equipment type identifier.

In order to obtain the previously described function, the terminal of the invention is characterized in that it comprises means for obtaining the IMEI associated with its MSISDN from the mobile telephone network, further comprising means for storing the obtained MSISDN-IMEI pair, and having foreseen the incorporation of a consultation interface permitting access to the MSISDN-IMEI pair from an outside application or from the network itself in order to obtain, from the IMEI, the features of each terminal associated with its MSISDN, and to thus be able to provide the different services adapted to the features of each terminal even though the user changes it.

In order for the system of the invention to exactly know the features of each one of the terminals, the inclusion of storage means of the features of each mobile terminal model existing on the market has been foreseen, as well as an administration interface for permitting introducing, consulting and updating the information of each mobile terminal model existing on the market, and enabling access to the features of each terminal type from the network itself or from an outside application.

The administration interface also controls the accesses carried out to all the information stored in the system. In this manner, only those parties subscribing to the system can access the information contained in the storage means of the features of each mobile terminal model existing on the market, and to the storage means of the obtained MSISDN-IMEI pair.

The means detecting each IMEI associated with its MSISDN pair generate a list with all the MSISDN-IMEI pair registrations circulating through the network.

In an embodiment of the invention, the generated list of MSISDN-IMEI pairs is obtained from the signaling occurring in the mobile telephone network when calls are established and/or when short messages are sent.

In another embodiment of the invention, the generated list of MSISDN-IMEI pairs is obtained from the tariff information circulating through the network.

From the aforementioned, it is obvious that the MSISDN-IMEI of each terminal circulates through the network on repeated occasions, in either of the two mentioned embodiments, since each terminal can make several calls and/or send messages each day.

Therefore, the system of the invention foresees the incorporation of suppression means of the MSISDN-IMEI pairs that are repeated, by means of a filtering, reducing the list to a single MSISDN-IMEI pair registration for each terminal.

In order to elaborate the list of each MSISDN-IMEI pair of each terminal, said pair of each terminal is initially stored, and it comprises means for comparing the initial list with successive lists obtained in different, pre-established time periods, storing the MSISDN-IMEI pair not found on the initial list, and it verifies if each pair has undergone changes with regard to the previously stored one, such that in each affirmative case, said pairs that have undergone changes are modified, such that each pair is registered each time a terminal accesses the network, and its data is updated each time the terminal accesses the network and it verifies that a modification thereof has occurred. In this manner, the MSISDN-IMEI pair information of each terminal is kept up to date. In the comparison for determining if the pair has undergone a modification, this will be reflected in its IMEI since its MSISDN number is kept.

Therefore, on the basis of that previously described, the invention foresees a process for storing and updating the mobile terminal features of the users of a mobile telephone network, characterized in that it comprises a MSISDN-IMEI pair acquisition phase, from which a list is elaborated with all the acquired MSISDN-IMEI pair registrations, and the repeated MSISDN-IMEI pair registrations are eliminated, the list of all the pairs being thereby stored so as to enable obtaining the features of each mobile terminal upon accessing said MSISDN-IMEI pairs list.

After obtaining an initial pairs list, successive lists are obtained in different time periods which contain the registration of each pair, in each one of which each pair obtained is compared with the one from the initial list, modifying the pairs from the initial list that have undergone modification and introducing the new pairs to update the MSISDN-IMEI pairs and to permit obtaining the features of each mobile terminal in real time upon accessing the updated list, from an outside application or from the mobile telephone network itself.

From the description of the system of the invention, it is deduced that the process of the invention foresees the elaboration of a list with the features of each mobile terminal model existing on the market so as to permit introducing, consulting and updating the information of each mobile terminal model existing on the market, and to permit obtaining the features of each terminal from the MSISDN-IMEI pair, as well as accessing said features from the network itself or from an outside application.

In order to aid in better understanding this specification and forming an integral part thereof, a series of drawings are attached below which, with an illustrative and non-limiting character, show the object of the invention.

### BRIEF DESCRIPTION OF THE DRAWINGS

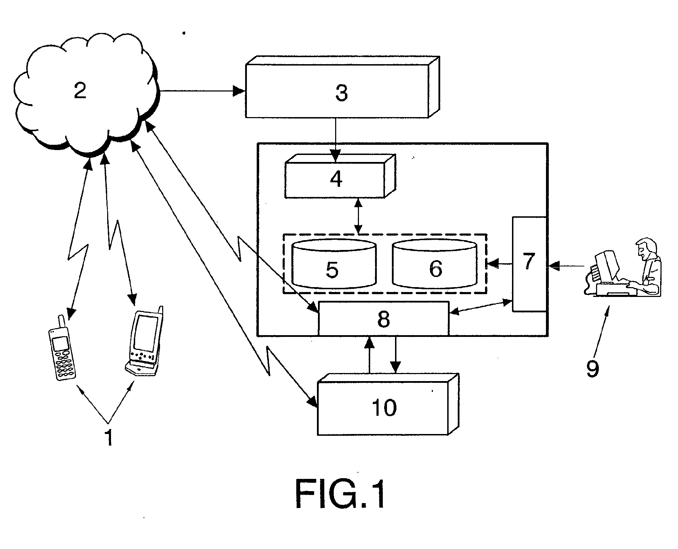

Figure 1.- shows a general functional block diagram of a possible embodiment example of the system of the invention.

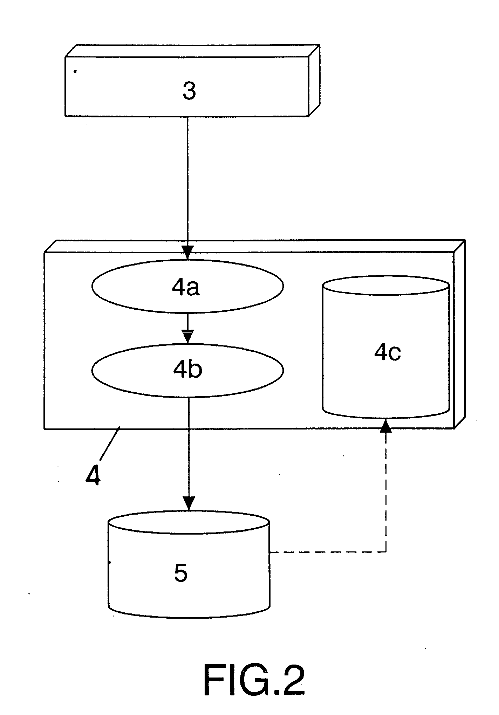

Figure 2.- shows a functional block diagram of the filter eliminating the repeated MSISDN-IMEI pairs and which updates those pairs that have undergone modification.

### DESCRIPTION OF THE PREFERRED EMBODIMENT

A description of the invention is carried out below on the basis of the aforementioned figures.

As previously indicated, in order to identify each mobile terminal 1 in a mobile telephone network 2, the MSISDN is used, which is a unique number assigned by the operator when the inscription of the mobile terminal occurs and it is the telephone number that is dialed for establishing a connection with another terminal.

On the other hand, the terminal used by the user is thereby identified by the IMEI, comprising the following fields:
- TAC (Type Approval Code), which is a code identifying the country where the programming was requested for the telephone type. Its first digits represent the country that approved it and the following determine the identifier of the equipment type included in the mobile terminal.
- FAC (Final Assembly Code), which identifies the equipment manufacturer.
- SNR (Serial Number), which determines the terminal's serial number, and it is a number assigned by the manufacturer of said terminal.
- Check Digit, which has the value 0 or 1 depending on the phase of the terminal. This parameter does not affect the understanding of the system of the invention, therefore it is not described in greater detail.

Therefore, as a result of the TAC and FAC field, the user's terminal model can be known.

For example, when a user establishes a call, a tariff registration is generated containing both its MSISDN and its IMEI, such that this information circulates through the mobile network 2. Likewise, this information circulates through the network 2 each time a user makes a call or sends a short message.

The system of the invention comprises a subsystem 3 that checks the information circulating through the mobile network 2 from which it extracts the IMEIs used by the MSISDNs, such that from this information, it generates a list with all the collected MSISDN-IMEI pair registrations.

The list carried out passes through a necessary filter 4 since the information contained in the listing is very redundant as each user can make several calls and/or send several short messages.

Thus, the filter 4 has an array and first filtering module 4a in which the MSISDN-IMEI pair registrations are arrayed, leaving a single entry per pair, thus eliminating redundancy due to different calls made by the same terminal.

Furthermore, the filter 4 has a comparison module 4b and a memory 4c, where the list of each MSISDN-IMEI pair is stored, such that the module 4b accesses said list 4c for deducing which users have changed terminal, i.e., IMEI. Next, after verifying that MSISDN-IMEI pairs have undergone changes, module 4b keeps them and eliminates the remaining MSISDN-IMEI pairs that have not undergone changes.

Module 4b sends the pairs that have changed to a user terminals data base 5 where the detected changes are stored.

An initialization phase is evidently needed to start up the system, in which all the mobile network clients, with their MSISDN-IMEI pair, are loaded into the data base 5. In practice, this loading does not have to be carried out punctually and absolutely, but rather it can be carried out in several days, as the users continue making calls and therefore appearing on the call list.

In this manner, the data base 5 stores the IMEI of the terminal that each mobile network user is using, together with its MSISDN telephone number.

On the other hand, it is necessary to store the features of each one of the terminal models existing on the market. To do so, a terminal model data base 6 has been foreseen which is accessed by means of an administration interface 7, which is accessed by means of computer equipment 9 for introducing this information or for modifying it.

Likewise, the administration interface 7 permits consulting and modifying the information stored in the user terminal data base 5.

Furthermore, the system of the invention comprises a consultation interface 8 through which access of outside parties 10 is permitted, which are therefore permitted to consult determined user terminal features, such that the outside party can provided service to mobile terminals 1, through the mobile network 2, adapted to the user terminal features.

Outside parties access the system of the invention as from the MSISDN, therefore said number is sent to the consultation interface 8, which contacts the administration interface 7 which manages the control of access of outside parties, such that the latter, as from the MSISDN, know the desired features of the terminal model that the user is using. Another possible implementation option consists of the outside party sending the MSISDN number, and receiving the user model name from the system.

Therefore, from the description made it is easily understood that outside parties subscribing to the system of the invention, as well as the network operator itself, know the features of each one of the mobile terminals used by the users, such that different services can be offered adapted to the different features of the terminals.

Furthermore, from the description made of the system of the invention, a process is deduced for storing and updating the mobile terminal features of the users of a mobile telephone network, such as that described in the section of "Description of the Invention".

## Claims

1. System for storing and updating mobile terminal features of the users of a mobile telephone network through which circulates, among other information, the terminal telephone number (MSISDN) of each subscriber and its International Mobile Equipment Identity (IMEI) containing information regarding the features of each mobile terminal (1); **characterized in that** it comprises obtainment means (3) of the IMEI associated with its MSISDN from the mobile telephone network (2), storage means (5) of the obtained MSISDN-IMEI pair and a consultation interface (8) permitting access to the MSISDN-IMEI pair from an outside application (10) or from the mobile network itself, in order to obtain from the IMEI the features of each terminal associated with its MSISDN and to thus be able to provide the different services adapted to the features of each terminal even though the user changes it.

2. System for storing and updating mobile terminal features of the users of a mobile telephone network according to claim 1, **characterized in that** it also comprises storage means (6) of the features of each mobile terminal model (1) existing on the market, and an administration interface (7) so as to permit introducing, consulting and updating the information of each mobile terminal model existing on the market, and to permit accessing said features from the network itself or from an outside application.

3. System for storing and updating mobile terminal features of the users of a mobile telephone network according to claim 2, **characterized in that** the administration interface also controls the accesses being made to all the information stored in the system.

4. System for storing and updating mobile terminal features of the users of a mobile telephone network according to claim 1, **characterized in that** the means detecting each IMEI associated with its MSISDN pair generate a list with all the MSISDN-IMEI pair registrations circulating through the mobile telephone network.

5. System for storing and updating mobile terminal features of the users of a mobile telephone network according to claim 4, **characterized in that** the list generated by the MSISDN-IMEI pairs is obtained from the signaling occurring in the mobile telephone network (2) when calls are established and/or short messages are sent.

6. System for storing and updating mobile terminal features of the users of a mobile telephone network according to claim 4, **characterized in that** the list generated by the MSISDN-IMEI pairs is obtained from the tariff information circulating through the network.

7. System for storing and updating mobile terminal features of the users of a mobile telephone network according to claims 5 or 6, **characterized in that** it comprises suppression means (4a) of the repeated MSISDN-IMEI pairs, reducing the list to a single registration for each terminal.

8. System for storing and updating mobile terminal features of the users of a mobile telephone network according to claim 7, **characterized in that** the MSISDN-IMEI pair of each terminal is initially stored on the list.

9. System for storing and updating mobile terminal features of the users of a mobile telephone network according to claim 8, **characterized in that** it comprises means (4b) comparing the initial stored MSISDN-IMEI pairs list of each terminal with successive lists obtained in different time periods, storing the MSISDN-IMEI pair not found on the list, and if it is found, the MSISDN-IMEI pairs that have undergone change are modified.

10. Process for storing and updating mobile terminal features of the users of a mobile telephone network, through which circulates, among other information, the terminal telephone number (MSISDN) of each subscriber and the International Mobile Equipment Identity (IMEI) containing information regarding the features of each mobile terminal (1); **characterized in that** it comprises a MSISDN-IMEI pairs acquisition phase, from which a list is selected with all the acquired MSISDN-IMEI pair registrations, and the repeated MSISDN-IMEI pair registrations are eliminated, storing the list of all MSISDN-IMEI pairs in order to obtain the features of each mobile terminal upon accessing said list; having foreseen that after obtaining an initial list, successive lists are obtained in different time periods which contain the registration of each MSISDN-IMEI pair, in each one of which each pair obtained is compared with that of the initial list, modifying the pairs of the initial list that have undergone modification and introducing the new pairs, updating the MSISDN-IMEI pairs so as to permit obtaining the features of each mobile terminal in real time upon accessing the updated list from an outside application or from the mobile telephone network itself.

11. Process for storing and updating mobile terminal features of the users of a mobile telephone network according to claim 10, **characterized in that** a list is elaborated with the features of each mobile terminal model existing on the market so as to permit introducing, consulting and updating the information of each mobile terminal model existing on the market and to permit obtaining the features of each terminal from the MSISDN-IMEI pair, as well as accessing said features from the network itself or from an outside application.
